# EUROPEAN PATENT SPECIFICATION

(11) **EP 3 453 985 B1**
(45) Date of publication and mention of the grant of the patent: **03.06.2020**
(21) Application number: 18382642.9
(22) Date of filing: 06.09.2018
(51) Int. Cl.: F24S 20/64, F24S 20/40, F24S 20/67, F24S 20/66, F24S 70/16

(54) **BIOCLIMATIC BUILDING**
BIOKLIMATISCHES GEBÄUDE
BÂTIMENT BIOCLIMATIQUE

(30) Priority: 07.09.2017 ES 201731093
(43) Date of publication of application: 13.03.2019
(73) Proprietor: Sunthalpy Engineering, S.L., 33022 Oviedo - Asturias (ES)
(72) Inventor: Suárez Álvarez, Carlos Omar, 33012 Oviedo - Asturias (ES)
(74) Representative: Carvajal y Urquijo, Isabel

(56) References cited:
- WO-A1-97/21962
- WO-A2-2011/018088
- DE-A1- 3 939 139
- US-A- 4 164 933
- US-A1- 2009 001 185
- US-A1- 2009 044 465
- US-A1- 2010 198 414

## Description

### Field of the invention

The present invention belongs to the technical field of construction systems, specifically to the construction of buildings, houses and closed areas, more specifically to the construction of their structures and enclosures and their optimization to reduce energy losses and specifically to low-enthalpy and high-performance energy systems, integrated in the constructive elements of the building for the collection of solar and geothermal energy, its storage, distribution and insulation. The invention relates in particular to a bioclimatic building with a solar energy collection system and a thermal distribution and emission system, formed by at least one serpentine tube through which a heat carrier fluid passes which is arranged in the interior of a concrete layer with high conductivity and high thermal diffusivity.

### Background of the invention

At present, society has become aware of the effects on the environment produced by CO2 emissions. Therefore, a series of actions are being taken such as the European Directive 2010/31/EU which states that all the member states of the EU should take measures so that from 2020 all new-builds have energy consumption which is nearly-zero.

In this context, the Passive House Institute in Darmstadt, Germany has been promoting since 1998 the implementation of a building technology by way of which energy efficiency is maximized by means of:
- Implementing very high levels of insulation in the entire envelope, windows and woodwork, while at the same time eliminating the thermal bridges, down to 15 KWh per square meter and year or 10W/m2 specific peak demand, while at the same time the solar and internal gains are optimized without exceeding 25°C more than 10% of the hours of one year.
- Sealing the infiltrations in the envelope and implementing mechanical ventilation with high-efficiency heat recovery which allows the air filtration to be 0.6 times as a maximum per hour under a pressure of 50 Pa.

Passive buildings, in spite of the fact that they reduce the energy demand by means of minimizing the energy losses, they are not taking advantage of all the potential offered by the current technology by means of implementing active systems such as thermal solar collectors and next generation photovoltaic collectors and the storage of sensible and latent thermal energy which can end up covering the energy demand even during periods of very adverse weather conditions.

The "nearly-zero buildings" are defined as buildings with high thermal efficiency, with a very small thermal demand, similar to passive buildings but in which said thermal demand is supposed to be met by renewable resources generated in the building itself or in proximity thereto.

To achieve the objectives of "zero", nearly-zero or even plus energy buildings, it is necessary to implement these active systems, whose architectonic and economic impact pose a barrier in their commercial development principally in the residential sector which is delaying the development and implementation of the "nearly-zero energy" objective in new buildings.

A bioclimatic building is therefore desirable which provides minimal energy consumption, avoiding the drawbacks of the previous systems existing in the prior art.

US 4,164,933 discloses a building according to the preamble of claim 1.

### Description of the invention

The present invention resolves the problems existing in the prior art by means of a bioclimatic building like the one described in claim 1.

The bioclimatic building has a solar energy collector system and a thermal distribution and emission system. The combined use of these systems allows work in low-enthalpy conditions which increases the performance of each one of these separately and in combination, as the losses to the environment are drastically reduced.

In the present invention, both the solar energy collector system and the thermal distribution and emission system have at least one serpentine tube configured so that a heat carrier fluid passes through it.

This serpentine tube is introduced into the interior of a special layer of concrete with high conductivity and thermal diffusivity which will be termed conductive concrete from now on. This conductive concrete is composed of a mixture of cement agglomerates and aggregates which includes, among others, a composition which in turn has silicon carbide (SiC) and which may or may not have graphite or any similar element with similar properties. In the present invention, the silicon carbide has a grain size greater than 1 millimeter in at least 30% by volume with respect to the total volume of concrete, the total volume of the composition which includes the silicon carbide being at least 45% with respect to the total volume of concrete. This will produce the high conductivity of the concrete layer owing to the larger silicon carbide particles (more than 1 millimeter), while the smaller silicon carbide particles act to fill them. Part of the smaller silicon carbide particles can be substituted with graphite particles, provided the composition, i.e. the sum of the silicon carbide and graphite is at least 45% of the total volume of concrete.

Therefore, since these systems are made principally from ceramic materials, the conductive concrete, its life expectancy is much greater than that of the active systems existing in the actual buildings which are made principally from metallic materials, with a greater need for maintenance and less useful life.

This conductive concrete is formed the same as a conventional concrete, by means of its mixing with the proportion of water corresponding to the cement agglomerates used and its pouring into a formwork with the shape which is intended to be obtained, possibly requiring the application of a vibration to facilitate its casting. Its application by pouring and forming, allows it to be adapted to any geometry of flat or curved faces on which it is intended to be applied. Like conventional concretes, there is the option of it being applied by projection.

The solar energy collector system is low-enthalpy and is integrated into the envelope of the building such that it captures heat energy with high performance, on the opaque exterior surface of the envelope with solar exposure.

This solar energy collector system in the envelope has, in its exterior part, on the structure elements and traditional insulation, a layer of conductive concrete with a thickness of between 10 and 30 millimeters. Embedded in this layer is a serpentine tube through which a heat carrier fluid circulates. The tube used has a section contained in a diameter less than 15 millimeters and is arranged extended over the entire collector surface such that there is a distance of preferably 40 and 120 millimeters between tubes.

In this way, the layer of conductive concrete has the virtue of being formed around the serpentine tube, perfectly copying its geometry during its installation, having a highly-conductive material fully adapted to its geometry which transmits the heat absorbed by the surface exposed to solar radiation to the heat carrier fluid which passes through the serpentine tube described.

The solar energy collector system preferably has, under the layer of concrete, an insulation layer with the aim of insulating said collector system and minimizing energy losses.

According to different particular embodiments of the invention, the layer of concrete of the solar energy collector system has arranged on its surface a traditional coating which does not need to be selective, dark, preferably matte to increase absorption. This coating can be implemented by means of different elements such as paint, slate platelets, shingles, brick or ceramic tile by means of applying a fine layer of mortar with silicon carbide content which eliminates holes and provides good transmission of heat via the layer of conductive concrete.

According to one particular embodiment of the invention, the layer of concrete of the solar energy collector system has on its surface a coating implemented in at least one selective sheet whose substrate is implemented in aluminum, copper, graphite or a combination of these.

It also allows the use of large format tiles or metallic panels anchored to the envelope itself or with its own exterior structure. These elements can be used as part of the formwork to pour the layer of conductive concrete such that the mortar is not required.

Additionally, the layer of concrete of the solar energy collector system can have, on its surface or on the previous coating, a transparent covering implemented in plastic or glass and an air chamber between the layer of concrete and the transparent covering. The performance of the collector is thus improved as it generates a greenhouse effect, especially when the absorbent surfaces are not selective. A system of regulatable slates can be arranged in the air chamber itself or on its exterior whose position is oriented in the direction of the sun, controlling the solar exposure and the appearance of said enclosure.

All the absorbent surfaces described will be less selective than those used in the existing conventional industrial solar collectors unless a metallic plate with a selective finish is used as a covering. However, the efficiency of the invention in its function as a solar collector will be very similar to those cited, given that despite its architectonic integration it reduces the heat losses to the exterior.

This solar energy collector system does not have energy loss on its rear side given that there it is the interior of the building, therefore all the heat flow in this sense is considered a direct energy gain, instead of loss as occurs with existing solar collectors.

The traditional tube collectors use as conductor material of the absorbed heat, between the absorbent selective surface and the surface of the tube in contact with the heat carrier fluid, metals with very high thermal conductivity such as copper or aluminum, but always with thicknesses of less than 1 millimeter given their high cost. This means that in the area without tube or without contact with the heat carrier fluid, which we will term fin, the flow of heat is unidirectional towards its joining with the tubes. This limited conductor section and the high cooling power of the heat carrier fluid means that the temperature in the fins is always greater than on the collector surface over the tube. Similarly, the absorbent surface situated on the tube has a significant temperature gradient between the joining with the fin which is at a higher temperature and that of its center point between two contiguous fins where less heat arrives from the fins as they are cooler. However, the collector system of the invention uses a material with a lower conductivity than aluminum or copper, but sufficiently high (>10W/mK) so that the increase of defined section which is more than 25 times greater, compensates the lower conductivity and the flow of heat between the collector surface and that of the heat carrier fluid is similar to that of an industrial collector, but with the advantage of going from a basically linear flow to a radial and uniform flow around the tubes through which the heat carrier fluid passes. In this way, the temperature gradients on the collector surface are minimized and therefore the losses to the exterior are reduced, counteracting the predictable greater loss due to emissivity when there are less selective, but absorbent coverings. On the other hand, the temperature around the conduit of heat carrier fluid is standardized, the exchange temperature increasing both at the center point of the tube and on its rear part opposed to the absorbent surface. All this optimizes the thermal transmission and therefore the performance of the collector.

In addition, the architectonic integration allows for the recovery of the heat, which the collector surfaces emits by convection and radiation via the air of the chamber, which is formed in the version of glass or plastic sheets, this being able to be used as a preheater of clean regenerating air coming from the exterior or even for its use in a solar chimney, therefore the use of coverings with non-selective surfaces is again compensated.

In terms of the thermal distribution and emission system, also low-enthalpy, it is key for obtaining the objective of "zero energy", given that it allows the performance of the collector to be optimized, since it functions with a heat carrier fluid at a temperature very close to the objective temperature of the environment to be conditioned.

The thermal distribution and emission system of the bioclimatic building object of the present invention is a development of that which is known as radiant floor, wall or roof by means of integrating serpentine tubes conducting a heat carrier fluid into the cited constructive elements. The innovation in this case again consists of the use of conductive concrete with more than 10 W/m.K of conductivity, as a radiant filling block containing the serpentine tube traditionally used in these systems.

In the thermal distribution and emission system, the section of the serpentine tube is less than 14 millimeters in diameter and the thickness of the radiant filling block is less than 28 millimeters, while in conventional radiant floors more than 50 millimeters of thickness is required, with a conductivity of less than 2 W/m.K to standardize the temperature on the emitting surface and provide the required shear resistance. The invention described allow a uniform temperature to be fixed on the emitting surfaces with a differential lower than 2°C with respect to the temperature of the circulating heat carrier fluid. Thus for a temperature of the emitting surface of 21°C, for the function of heating it would be sufficient to have less than 23°C in the heat carrier fluid and for cooling more than 19°C when with the conventional systems created up to now the temperature differential is greater than 8°C, irrespective of the insulation level defined for the building.

This is possible owing to the fact that the thermal transfer factor K/L of the radiant filling block, K being the conductivity of the material and L the thickness, of the invention is 10 times greater than that of the conventional radiant floor. The invention is so effective that the low resistance, expanded polystyrene insulation can be eliminated, provided the thermal bridges of the slabs are closed in the envelope or it can be substituted with less insulation such as MDF or DM panels without the directionality of the flow of heat being affected. In this way, the building is also given greater heat accumulation capacity.

The smaller temperature differential of the heat carrier fluid with respect to the emitter has the following advantages in the bioclimatic building object of the invention:
- Reducing the undesired losses prior to arriving to the emitting surface.
- Reducing losses by the thermal bridge effect of the emitting block in the direction of the envelope.
- Increasing the performance of the low-enthalpy solar energy collection system integrated into the envelope, given that the entire collector system is more efficient at lower temperature of the heat carrier fluid, since the losses by radiation and convection from the collector to the environment are reduced.
- Increasing the performance of the geothermal heat pump systems since the temperature differential with the exterior focus reduces.
- Increasing the capacity of the sensible heat accumulation systems given that the use range of useful temperatures is increased, which also reduces the losses of the accumulator towards the environment. It allows the same quantity of sensible heat to be accumulated at a lower temperature. It enables for example the option of converting a swimming pool conditioned at 32°C, integrated in the building into a heat accumulator useful up to 23°C.
- Increasing the performance of the latent heat accumulation systems given that it allows accumulator materials to be used with a melting point closer to the comfort temperature and therefore to reduce its losses toward the environment.

In addition, the reduced thickness of this thermal distribution and emission system reduces the loss by the thermal bridge effect to the exterior and enables the implementation of this system similar to the low-enthalpy radiant floor for homes already existing with reduced heights of the living spaces.

According to a preferred embodiment of the invention, the building can have a geothermal exchanger system which also has at least one serpentine tube configured for a heat carrier fluid to pass through it, arranged in the interior of a conductive concrete layer composed of a mixture of cement agglomerates like that of the collector system. In relation to this geothermal exchanger system, it will also be low-enthalpy. The floor around the bioclimatic building object of the present invention or specific parts of the building can be used as a heat focus or accumulator, either to provide heat or cooling. The building object of the invention is fitted with buried blocks of conductive concrete formed around a serpentine through which a heat carrier fluid passes and reduces the exchange dimensions with this focus-collector either reducing the tube section required or its length which involves a considerable saving both in the outlay as its size is reduced and the energy required in the pumping of the heat carrier fluid.

The conductive concrete used in the geothermal exchanger system has a compression resistance greater than 40 MPa, therefore the exchangers could be situated in constructive elements supporting load, like the bases of load-bearing walls or foundation slabs. In this way, it is not necessary to carry out works in addition to the normal construction works in order to implement a low-cost and high-performance geothermal exchanger system like the one of the present invention.

This geothermal exchanger system, together with the solar energy collector system has a second function as an active insulation system of the building which can be defined as "cave effect" in all the envelopes in which it is arranged, independently of its solar exposure, of the simplest version initially described with the layer of conductive concrete and serpentine tube with circulation of a heat carrier fluid. In extreme temperature conditions (for example below 8°C), a fluid can be circulated through the solar energy collector system which also passes through the geothermal exchange system (which will be maintained by the geothermal inertia above 12°C), by way of which heat energy from the ground will be transferred to the exterior layer of the envelop, creating a geothermal shield which reduces the thermal gradient with the exterior, with the simple use of the energy required to circulate the heat carrier fluid between both focuses. This shield system is also applicable for situations where cooling is required when the temperature of the environment rises from 28°C. With this system, we can essentially convert a conventional building at a thermal level into one which behaves like a building situated in the subsoil, safe from the abrupt and extreme variations of the environment.

In summary, the bioclimatic building object of the invention has an interior heat emitting system with the lowest possible enthalpy which means that the integrated systems of solar and geothermal collection, together with the heat accumulators work at the lowest possible temperature, therefore their performance is maximized meaning that the result overall is a building with fully optimized thermal management, not seen hitherto.

The bioclimatic building object of the invention is characterized by the integration of the constructive elements of very low-enthalpy active solar energy collection, storage, distribution and insulation systems, improving the energy performance of the building overall, at the same time as minimizing the visual impact which the conventional active systems cause in the building.

The invention also involves a relevant economic saving in the implementation of buildings with a "zero energy" or "nearly-zero energy" objective, given that these active systems are implemented via traditional constructive elements required for the construction of the building which allows the additional structural and insulation elements of the active systems known hitherto to be eliminated.

### Brief description of the drawings

An embodiment of the invention making reference to a series of figures will be described below in an illustrative, but non-limiting manner to provide a better understanding of the invention.
Figure 1 schematically shows a sectioned view of a bioclimatic building object of the present invention.
Figure 2 is a schematic sectional view of a conventional collector of the prior art which is arranged in the envelopes of certain buildings.
Figure 3 is a schematic sectional view of a collector integrated into the envelope of the bioclimatic building of Figure 1.
Figure 4 is a schematic sectional view of a conventional radiant floor emitting system of the prior art which is arranged in the interior of certain buildings.
Figure 5 is a schematic sectional view of a preferred embodiment of a thermal distribution and emission system integrated into the bioclimatic building of Figure 1.

In these figures, reference is made to a combination of elements which are:
1. solar energy collector system
2. geothermal exchanger system
3. thermal distribution and emission system
4. serpentine tube
5. layer of conductive concrete
6. surface of the concrete layer
7. transparent covering of the concrete layer
8. air chamber between the concrete layer and the transparent covering
9. thermal insulation layer
10. structural part
11. active insulation system
12. ground
13. sensible heat store
14. latent heat store
15. low-enthalpy exchanger
16. box of the conventional solar energy collector
17. anchoring system for the conventional solar collector
18. additional insulation for the conventional solar collector
19. inlet and outlet conduits of heat carrier fluid of the conventional solar collector
20. fin of the conventional solar collector
21. glass covering of the conventional solar collector
22. surface covering of the thermal distribution and emission system

### Detailed description of the invention

The object of the present invention is a bioclimatic building.

As shown in the figures, the bioclimatic building has a solar energy collector system 1 and a thermal distribution and emission system 3.

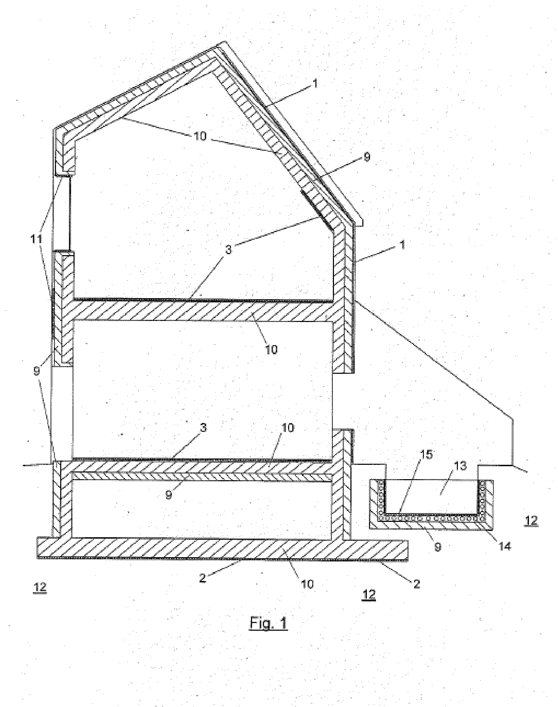

Figure 1 shows an embodiment of the bioclimatic building object of the invention in which the integrated low-enthalpy solar energy collector system 1 forms part of the envelopes of the building with direct solar exposure, composed principally by its structural part 10 and its thermal insulation layer 9. The integrated low-enthalpy solar energy collector system 1 can be anchored from the structural part 10, supported by the thermal insulation layer 9 in the case of inclined envelopes or have its own external lightweight structure. Additionally, it can have a transparent covering 7 leaving a narrow air chamber 8 or even creating a wider space in the manner of a compartment, as shown in Figure 1.

The façade of the bioclimatic building that is not exposed to the sun can have an active insulation system 11, protecting the entire envelope or specific areas thereof like thermal bridges, woodwork and more sensitive coatings of the envelope. The active insulation system 11 itself can be converted into an integrated low-enthalpy solar energy collector system 1 if there is an external element which reflects the solar radiation on this façade that is not exposed to the sun.

The low-enthalpy thermal distribution and emission system 3 is arranged on the interior slabs, walls and roofs of the building. The heat carrier fluid passing through the same can come from the solar energy collector system 1 or even from an optional geothermal exchanger system 2 which is described below.

According to the invention, said solar energy collector system 1 and thermal distribution and emission system 3 have at least one serpentine tube 4 through which a heat carrier fluid passes.

This serpentine tube 4 is introduced into the interior of a layer of special concrete 5 with high conductivity and thermal diffusivity which is termed conductive concrete below. This conductive concrete is composed of a mixture of cement agglomerates and aggregates which includes, among others, a composition which in turn has silicon carbide (SiC) and which may or may not have graphite. According to the present invention, the silicon carbide has a grain size greater than 1 millimeter in at least 30% by volume with respect to the total volume of concrete, the total volume of the composition which includes the silicon carbide being at least 45% with respect to the total volume of concrete. The larger silicon carbide particles (more than 1 millimeter) will thus provide the high conductivity of the concrete layer, while the smaller silicon carbide particles act to fill them. Part of the smaller silicon carbide particles can be substituted with graphite particles, provided the composition, i.e. the sum of the silicon carbide and graphite is at least 45% of the total volume of concrete.

Additionally and according to a preferred embodiment of the invention, the serpentine tube 4 has a diameter of less than 15 millimeters.

According to a preferred embodiment of the invention, the solar energy collector system 1 has, below the layer of conductive concrete 5, an insulation layer 9 with the aim of insulating said collector system and minimizing energy losses in the same.

According to different particular embodiments of the invention, the layer of concrete 5 of the solar energy collector system 1 has arranged on its surface a dark coating which can be implemented by means of different elements such as paint, slate, ceramic tile, sheet metal and a combination of the foregoing.

Alternatively, the layer of concrete 5 can have on its surface 6 a coating implemented in at least one selective sheet whose substrate is formed by aluminum, copper, graphite or a combination of the foregoing.

Additionally, the layer of concrete 5 of the solar energy collector system 1 can have arranged on its surface 6 or on the previous coating a transparent covering 7 implemented in plastic or glass and an air chamber 8 between the layer of concrete 5 and said transparent covering 7.

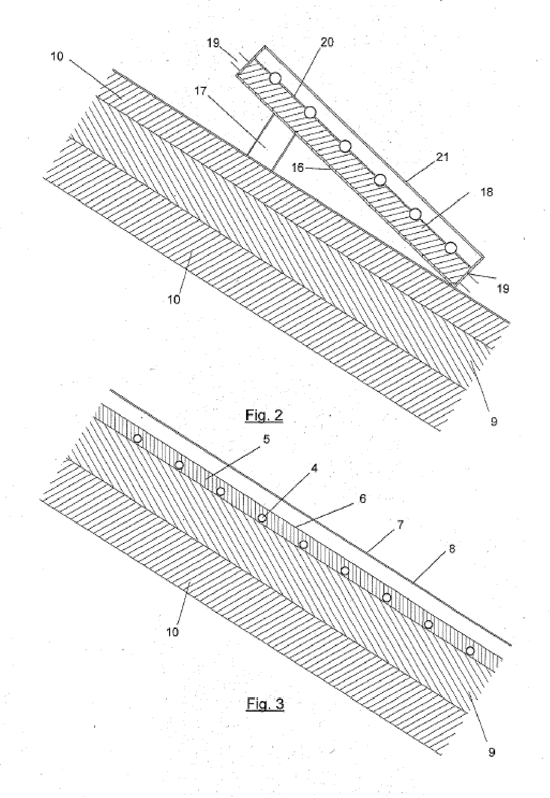

Figure 2 shows a traditional solar collector section on the covering of a building, while Figure 3 shows a section of a preferred embodiment of the low-enthalpy solar energy collector system 1 integrated in the envelope of the bioclimatic building of the present invention. This solar energy collector system 1 takes advantage of the structural part 10 and the thermal insulation layer 9 of the building, while the conventional solar collector requires a box 16 which contains a system for anchoring 17 to the coating which covers the structural part 10 of the envelope of the building. In addition, it requires additional insulation 18 in its rear part.

The inlet and outlet conduits 19 of the heat carrier fluid of the conventional solar collector are uncovered outdoors, as can be seen in Figure 2, while in the present invention they are directly, without any course, external to the thermal insulation layer 9, as can be seen in Figure 3. In this embodiment of the invention shown in Figure 3, the serpentine tube 4 is cross-linked polyethylene similar to that used in traditional radiant floor systems, but with an external diameter of 12 millimeters, lower than those cited. This tube 4 is adaptable with a turn radius less than 40 millimeters, which together with the layer of conductive concrete 5 which is adapted to any geometry, allows the integrated low-enthalpy solar energy collector system 1 to be arranged on surface that is flat, curved or with abrupt changes in level. The traditional solar collector, however, has a box 16 and an absorbent metal plate and rigid conductors which limit its adaptations to flat geometries, as is observed in Figure 2.

In the traditional solar collector of Figure 2, the unidirectional flow between the fin 20 and the joining with the tube means that the temperature of the fin 20 is greater than that of the joining with the tube and this in turn with the exposed center point of the tube, which involves a loss of performance with respect to the present invention where the absorption surface 6 painted in black has a lower uniform temperature, given the radial flow which is produced from the absorption surface 6 by way of the layer of conductive concrete 5 to the serpentine tube 4.

In the conventional solar collector of Figure 2, the air which is in the chamber formed between the absorbent metal plate and the glass covering 21 is trapped, irreversibly increasing its temperature. However, in the present invention, the air in the chamber 8 between the absorption surface 6 and the transparent covering 7 can be easily driven to the interior of the building as regenerating air, converting into a gain which in the traditional solar collector is an energy loss.

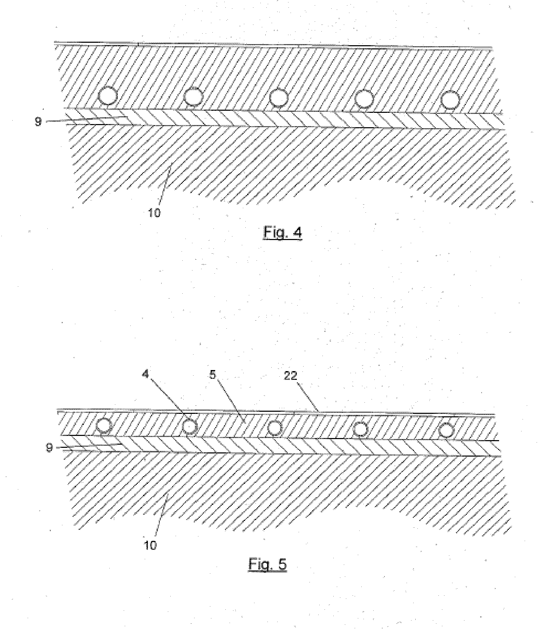

In terms of the thermal distribution and emission system, Figure 4 shows a section of a traditional radiant floor emitting system, while Figure 5 shows a section of an embodiment of a thermal distribution and emission system of a building object of the present invention. Both systems are situated in the structural part 10 of the interior surfaces of the building, floor, walls or roofs. The surface covering 22, preferably ceramic, is also similar in both cases

The conventional radiant floor shown in Figure 4 has cross-linked polyethylene tubes with a diameter significantly greater than the serpentine tube 4, also made of cross-linked polyethylene, used in the thermal distribution and emission system of the invention shown in Figure 5, whose diameter is less than 14 mm.

The radiant filling block of the invention is implemented in a layer of conductive concrete 5 whose conductivity is greater than 10 W/m.K which allows, using a thickness of the radiant filling block of less than 28 mm, a uniform temperature in the surface covering 22 of the invention, very similar to that of the water circulating through the serpentine tube 4.

This fact gives the layer of conductive concrete 5 of the invention a thermal transmission capacity more than 10 times greater than that which the filling block of traditional radiant floor of Figure 4 has, due to the combined effect of having greater conductivity and lower thickness.

According to a preferred embodiment of the invention, the bioclimatic building has a geothermal exchanger system 2 which like the solar energy collector system 1 and the thermal distribution and emission system 3 has at least one serpentine tube 4 configured for passing a heat carrier fluid through it, arranged in the interior of a layer of concrete 5 composed by a mixture of cement agglomerates and aggregates which in turn comprises silicon carbide and graphite in which the silicon carbide has a grain size greater than 1 millimeter in at least 30% by volume with respect to the total volume of concrete, the total volume of silicon carbide and graphite being at least 45% with respect to the total volume of concrete, similar to the solar energy collector system 1. This geothermal exchanger system 2 is low-enthalpy and is arranged in the substructure and foundations of the building in direct contact with the ground 12. In this way, at times of excess sunshine and without demand for heat, heat can be pumped directly between the solar energy collector system 1 and the geothermal exchanger system 2. When the energy demand so requires and the temperature of the store of the ground 12 allows, heat can be transferred or the interior of the building cooled by way of the thermal distribution and emission systems 3. In extreme winter conditions, the thermal distribution and emission system 3 is used principally for supplying the active insulation system 11 and the solar energy collector system 1 in its function as shield, in the absence of sunshine.

This embodiment has sensible 13 and latent 14 heat stores, both being in contact with the low-enthalpy exchanger 15 and covered by the ground 12 with the insulation layer 9. Similarly, these sensible 13 and latent 14 heat stores can be situated inside the insulated area of the bioclimatic building for better utilization of the losses from the same toward the building itself. The main problem with conventional heat accumulators is that they need to store energy both sensible and latent at temperatures relatively different from the environment, which increases their losses and reduces their effectiveness. The sensible 13 and latent 14 heat stores have the virtue of being able to accumulate a significant quantity of heat at temperatures relatively close to those of comfort, reducing their losses given that the low-enthalpy thermal distribution and emission system 3 in the interior of the building is capable of functioning at a temperature of the heat carrier fluid very close to the comfort temperature without the low-enthalpy exchanger 15 posing any obstacle to said energy transfer. The sensible heat store 13 can work as a heat dissipater in summer conditions, when water is used as an accumulator element and it is situated outdoors without solar exposure by way of the cooling effect of the latent evaporation heat of the water. This involves a consumption of this fluid which would need to be replenished.

According to preferred embodiments of the invention, the layer of conductive concrete 5 of the solar energy collector system 1 has a thickness of between 10 and 30 millimeters, while the layer of conductive concrete 5 of the geothermal exchanger system 2 and that of the thermal distribution and emission system has a thickness of less than 28 millimeters.

The invention can use a layer of conductive concrete 5 with reduced thickness, precisely owing to the fact that its high conductivity allows it to eliminate the insulation layer 9 or use materials with lower insulation but that are rigid such as DM or MDF which have a high compression resistance greater than 12 MPa and shear resistance of 20 MPa which prevent the spring effect of conventional insulation, without fear of having lower performance in the directionality of the heat toward the surface covering 22 of the invention. In addition, the layer of conductive concrete 5 has a compression resistance of 40 MPa and the hollow effect of the serpentine tube 4 is minimized by its smaller diameter. In this embodiment of the invention, the surface covering 22 is adhered to the layer of conductive concrete 5 by means of a silicon carbide mortar to optimize the thermal transmission.

The conventional radiant floor is conditioned by low conductivity, less than 3 W/m.K, of the radiant filling block and its low mechanical resistance, as it is a cement and sand mortar. For this reason, it requires better insulation such as expanded polystyrene with only 0.15 MPa compression resistance which generate shear forces which according to UNE EN 1264-4 require a minimum thickness of the radiant block of 30 mm to be used on top of the upper part of the tube. In practice, this means that the radiant block (27) has a thickness greater than 50 mm.

The layer of conductive concrete 5 used in the different systems of the present invention can have different compositions, some of these being shown in the following examples:

### Example 1: proportions by volume

- Portland cement: 16%
- Silicon carbide with grain size greater than 1 mm: 31%
- Silicon carbide with grain size less than 1 mm: 15%
- Sand with a grain size of 0 to 4 mm: 25%
- Water: 12.5%
- Self-levelling additive: 0.5%

### Example 2: proportions by volume

- Portland cement: 16%
- Silicon carbide with grain size greater than 1 mm: 31%
- Silicon carbide with grain size less than 1 mm: 8%
- Graphite: 8%
- Sand with a grain size of 0 to 4 mm: 24%
- Water: 12.5%
- Self-levelling additive: 0.5%

### Example 3: proportions by volume

- Calcium aluminate cement: 5%
- Silicon carbide with grain size greater than 1 mm: 50%
- Silicon carbide with grain size less than 1 mm: 29%
- Graphite: 8%
- Water: 7%
- Self-levelling additive: 1%

### Example 4: proportions by volume

- Portland cement: 15%
- Silicon carbide with grain size greater than 1 mm: 50%
- Silicon carbide with grain size less than 1 mm: 24.5%
- Water: 10%
- Self-levelling additive: 0.5%

## Claims

1. A bioclimatic building comprising
- a solar energy collector system (1),
- and a thermal distribution and emission system (3), wherein the solar energy collector system (1) and the thermal distribution and emission system (3) comprise
- at least one serpentine tube (4) configured for a heat carrier fluid to pass through it, arranged in the interior of
- a layer of concrete (5), **characterized in that** the layer of concrete is composed by a mixture of cement agglomerates and aggregates comprising a composition which in turn comprises silicon carbide,
- the silicon carbide having a grain size greater than 1 millimeter in at least 30% by volume with respect to the total volume of concrete
- the total volume of said composition being at least 45% with respect to the total volume of concrete.

2. The bioclimatic building according to claim 1, **characterized in that** the composition of the concrete layer comprises graphite.

3. The bioclimatic building according to any of the preceding claims, **characterized in that** the serpentine tube (4) has a diameter of less than 15 millimeters.

4. The bioclimatic building according to any of the preceding claims, **characterized in that** the solar energy collector system (1) comprises, under the concrete layer (5), an insulation layer (9).

5. The bioclimatic building according to any of the preceding claims, **characterized in that** the concrete layer (5) of the solar energy collector system (1) has a thickness of between 10 and 30 millimeters.

6. The bioclimatic building according to any of the preceding claims, **characterized in that** the concrete layer (5) of the solar energy collector system (1) comprises, arranged on its surface (6), a dark coating implemented by means of an element selected from paint, slate, ceramic tile, sheet metal and a combination of the foregoing.

7. The bioclimatic building according to any of the preceding claims, **characterized in that** the concrete layer (5) of the solar energy collector system (1) comprises, arranged on its surface (6), a covering implemented in at least one selective sheet whose substrate is implemented in an element selected from aluminum, copper, graphite and a combination of foregoing.

8. The bioclimatic building according to any of the preceding claims, **characterized in that** the concrete layer (5) of the solar energy collector system (1) comprises, arranged on its surface (6), a transparent covering (7) implemented in a material selected from plastic and glass, and an air chamber (8) between the concrete layer (5) and the transparent covering (7).

9. The bioclimatic building according to any of the preceding claims, **characterized in that** the concrete layer (5) of the thermal distribution and emission system (3) has a thickness of less than 28 millimeters.

10. The bioclimatic building according to any of the preceding claims, **characterized in that** it comprises a geothermal exchanger system (2) in turn comprising
- at least one serpentine tube (4) configured for a heat carrier fluid to pass through it, arranged in the interior of
- a layer of concrete (5) composed by a mixture of cement agglomerates and aggregates which in turn comprises silicon carbide and graphite,
- the silicon carbide having a grain size greater than 1 millimeter in at least 30% by volume with respect to the total volume of concrete
- and wherein the total volume of silicon carbide and graphite is at least 45% with respect to the total volume of concrete.

11. The bioclimatic building according to the preceding claim, **characterized in that** the layer of concrete (5) of the geothermal exchanger system (2) has a thickness of less than 28 millimeters.

## Patentansprüche

1. Bioklimatisches Gebäude, Folgendes umfassend:
- ein Sonnenenergie-Kollektorsystem (1)
- und ein Wärmeverteilungs- und Abgabesystem (3), wobei das Sonnenenergie-Kollektorsystem (1) und das Wärmeverteilungs- und Abgabesystem (3) Folgendes umfassen:
- mindestens ein Schlangenrohr (4), das für den Durchgang eines Wärmeträgerfluids ausgebildet ist, angeordnet im Inneren
- einer Betonschicht (5), **dadurch gekennzeichnet, dass** die Betonschicht aus einer Mischung aus Zementagglomeraten und Zuschlagstoffen besteht, umfassend eine Zusammensetzung, die wiederum Siliciumcarbid umfasst,
- wobei das Siliciumcarbid eine Korngröße von mehr als 1 Millimeter in mindestens 30 Vol.-%, bezogen auf das Gesamtvolumen des Betons, aufweist,
- wobei das Gesamtvolumen der Zusammensetzung mindestens 45 % bezogen auf das Gesamtvolumen des Betons beträgt.

2. Bioklimatisches Gebäude gemäß Anspruch 1, **dadurch gekennzeichnet, dass** die Zusammensetzung der Betonschicht Graphit umfasst.

3. Bioklimatisches Gebäude gemäß einem der vorhergehenden Ansprüche, **dadurch gekennzeichnet, dass** das Schlangenrohr (4) einen Durchmesser von weniger als 15 Millimeter aufweist.

4. Bioklimatisches Gebäude gemäß einem der vorhergehenden Ansprüche, **dadurch gekennzeichnet, dass** das Sonnenenergie-Kollektorsystem (1) unter der Betonschicht (5) eine Isolierschicht (9) umfasst.

5. Bioklimatisches Gebäude gemäß einer der vorhergehenden Ansprüche, **dadurch gekennzeichnet, dass** die Betonschicht (5) des Sonnenenergie-Kollektorsystems (1) eine Stärke zwischen 10 und 30 Millimetern aufweist.

6. Bioklimatisches Gebäude gemäß einem der vorhergehenden Ansprüche, **dadurch gekennzeichnet, dass** die Betonschicht (5) des Sonnenenergie-Kollektorsystems (1) auf ihrer Oberfläche (6) eine dunkle Beschichtung umfasst, die mit einem Element, das aus Farbe, Schiefer, Keramikfliesen, Blech und einer Kombination der vorstehenden Elemente ausgewählt ist, ausgeführt wird.

7. Bioklimatisches Gebäude gemäß einem der vorhergehenden Ansprüche, **dadurch gekennzeichnet, dass** die Betonschicht (5) des Sonnenenergie-Kollektorsystems (1) auf ihrer Oberfläche (6) eine Abdeckung umfasst, die in mindestens einer selektiven Folie ausgeführt ist, deren Substrat aus einem Element besteht, das aus Aluminium, Kupfer, Graphit und einer Kombination der vorstehenden Elemente ausgewählt ist.

8. Bioklimatisches Gebäude gemäß einem der vorhergehenden Ansprüche, **dadurch gekennzeichnet, dass** die Betonschicht (5) des Sonnenenergie-Kollektorsystems (1) eine auf ihrer Oberfläche (6) angeordnete transparente Abdeckung (7), die in einem aus Kunststoff und Glas ausgewählten Material ausgeführt ist, und eine Luftkammer (8) zwischen der Betonschicht (5) und der transparenten Abdeckung (7) umfasst.

9. Bioklimatisches Gebäude gemäß einem der vorhergehenden Ansprüche, **dadurch gekennzeichnet, dass** die Betonschicht (5) des Wärmeverteilungs- und Abgabesystems (3) eine Stärke von weniger als 28 Millimeter aufweist.

10. Bioklimatisches Gebäude gemäß einem der vorhergehenden Ansprüche, **dadurch gekennzeichnet, dass** es ein Erdwärmetauschersystem (2) umfasst, das wiederum Folgendes umfasst:
- mindestens ein Schlangenrohr (4), das für den Durchgang eines Wärmeträgerfluids ausgebildet ist, angeordnet im Inneren
- einer Betonschicht (5), die aus einer Mischung aus Zementagglomeraten und Zuschlagstoffen besteht, die wiederum Siliciumcarbid und Graphit umfasst,
- wobei das Siliciumcarbid eine Korngröße von mehr als 1 Millimeter in mindestens 30 Vol.-%, bezogen auf das Gesamtvolumen des Betons, aufweist,
- und wobei das Gesamtvolumen von Siliciumcarbid und Graphit mindestens 45 % des Gesamtvolumens von Beton beträgt.

11. Bioklimatisches Gebäude gemäß dem vorhergehenden Anspruch, **dadurch gekennzeichnet, dass** die Betonschicht (5) des Erdwärmetauschersystems (2) eine Stärke von weniger als 28 Millimeter aufweist.

## Revendications

1. Bâtiment bioclimatique comprenant
- un système de collecteur d'énergie solaire (1),
- et un système de distribution et d'émission thermique (3), dans lequel le système de collecteur d'énergie solaire (1) et le système de distribution et d'émission thermique (3) comprennent
- au moins un tube en serpentin (4) configuré pour le passage d'un fluide caloporteur, disposé à l'intérieur
- d'une couche de béton (5), **caractérisé en ce que** la couche de béton est composée d'un mélange d'agglomérés de ciment et d'agrégats comprenant une composition qui comprend à son tour du carbure de silicium,
- le carbure de silicium ayant une granulométrie supérieure à 1 millimètre dans au moins 30% en volume par rapport au volume total du béton
- le volume total de ladite composition étant d'au moins 45% par rapport au volume total du béton.

2. Bâtiment bioclimatique selon la revendication 1, **caractérisé en ce que** la composition de la couche de béton comprend du graphite.

3. Bâtiment bioclimatique selon l'une quelconque des revendications précédentes, **caractérisé en ce que** le tube en serpentin (4) a un diamètre inférieur à 15 millimètres.

4. Bâtiment bioclimatique selon l'une quelconque des revendications précédentes, **caractérisé en ce que** le système de collecteur d'énergie solaire (1) comprend, sous la couche de béton (5), une couche d'isolation (9).

5. Bâtiment bioclimatique selon l'une quelconque des revendications précédentes, **caractérisé en ce que** la couche de béton (5) du système de collecteur d'énergie solaire (1) a une épaisseur comprise entre 10 et 30 millimètres.

6. Bâtiment bioclimatique selon l'une quelconque des revendications précédentes, **caractérisé en ce que** la couche de béton (5) du système de collecteur d'énergie solaire (1) comprend, disposé sur sa surface (6), un revêtement sombre réalisé au moyen d'un élément choisi parmi la peinture, l'ardoise, le carrelage céramique, la tôle et une combinaison de ceux-ci.

7. Bâtiment bioclimatique selon l'une quelconque des revendications précédentes, **caractérisé en ce que** la couche de béton (5) du système de collecteur d'énergie solaire (1) comprend, disposé sur sa surface (6), un revêtement réalisé dans au moins une feuille sélective dont le substrat est réalisé dans un élément choisi parmi l'aluminium, le cuivre, le graphite et une combinaison de ceux-ci.

8. Bâtiment bioclimatique selon l'une quelconque des revendications précédentes, **caractérisé en ce que** la couche de béton (5) du système de collecteur d'énergie solaire (1) comprend, disposé sur sa surface (6), un revêtement transparent (7) réalisé dans au moins un matériau choisi parmi le plastique et le verre, et une chambre d'air (8) entre la couche de béton (5) et le revêtement transparent (7).

9. Bâtiment bioclimatique selon l'une quelconque des revendications précédentes, **caractérisé en ce que** la couche de béton (5) du système de distribution et d'émission thermique (3) a une épaisseur inférieure à 28 millimètres.

10. Bâtiment bioclimatique selon l'une quelconque des revendications précédentes, **caractérisé en ce qu'**il comprend un système d'échangeur géothermique (2) comprenant à son tour
- au moins un tube en serpentin (4) configuré pour le passage d'un fluide caloporteur, disposé à l'intérieur
- d'une couche de béton (5) composée d'un mélange d'agglomérés de ciment et d'agrégats qui comprend à son tour du carbure de silicium et du graphite,
- le carbure de silicium ayant une granulométrie supérieure à 1 millimètre dans au moins 30% en volume par rapport au volume total du béton
- et dans lequel le volume total de carbure de silicium et de graphite est d'au moins 45% par rapport au volume total de béton.

11. Bâtiment bioclimatique selon la revendication précédente, **caractérisé en ce que** la couche de béton (5) du système d'échangeur géothermique (2) a une épaisseur inférieure à 28 millimètres.
